# EUROPEAN PATENT APPLICATION

(11) **EP 3 597 570 A1**
(43) Date of publication of application: **22.01.2020**
(21) Application number: 17900432.0
(22) Date of filing: 25.12.2017
(51) Int. Cl.: B65G 47/53, B65B 35/50, B65G 15/26

(54) **ARTICLE ALIGNMENT DEVICE**

(30) Priority: 17.03.2017 JP 2017053420; 17.03.2017 JP 2017053421; 17.03.2017 JP 2017053422
(71) Applicant: Ishida Co., Ltd., Kyoto-shi, Kyoto 606-8392 (JP)
(72) Inventor: YOKOTA, Yuji, Ritto-shi Shiga 520-3026 (JP); IWASA, Tatsuya, Ritto-shi Shiga 520-3026 (JP); TAKAHASHI, Atsushi, Ritto-shi Shiga 520-3026 (JP); SHIMOMAE, Yoshinobu, Ritto-shi Shiga 520-3026 (JP); NOGUCHI, Takeshi, Ritto-shi Shiga 520-3026 (JP); ARIMATSU, Tatsuya, Ritto-shi Shiga 520-3026 (JP)
(74) Representative: Lang, Johannes
(86) International application number: PCT/JP2017/046409
(87) International publication number: WO 2018/168149

(57) **Abstract**

It is a problem of the present invention to provide an article alignment device that can inhibit posture disorderliness when articles land. The posture of bags G when the bags G transfer from an input conveyor (212) to a first aligning conveyor (221) is inclined in such a way that the portions of the bags G that land on bags G already placed on the first aligning conveyor (221) are higher and the portions of the bags G that land directly on the first aligning conveyor (221) are lower, so the bags G land on the first aligning conveyor (221) before or at the same time that they contact the bags G that were placed on the first aligning conveyor (221) before them. Additionally, the frictional force between the first aligning conveyor (221) and the bags G is greater than the frictional force between the bags G, so sliding between the bags G is prevented and posture disorderliness is inhibited.

## Description

### TECHNICAL FIELD

The present invention relates to an article alignment device that aligns articles before the articles are packed into boxes.

### BACKGROUND ART

Conventionally, a box packing apparatus is known which tosses articles from a horizontal conveyor located upstream in a conveyance direction to a downstream conveyor and, while conveying the articles a fixed distance at a time, aligns the articles so that the articles partially lie on top of each other. For example, the box packing apparatus disclosed in patent document 1 (JP-A No. 2009-280279) creates a line of articles by aligning plural pouch-like articles to a state in which mutually adjacent articles partially lie on top of each other, conveys the line with conveying means, and puts a predetermined quantity of the articles as a group into a predetermined box.

### SUMMARY OF INVENTION

### <Technical Problem>

However, sometimes, just before a dropped article lands on the conveyor, the dropped article contacts and slidingly moves on an article that was dropped before it, so that the posture of the dropped article becomes disordered. Hence, this gives rise to work that is normally unnecessary, such as requiring a separate process for correcting posture disorderliness.

It is a problem of the present invention to provide an article alignment device that can inhibit posture disorderliness when articles land.

### <Solution to Problem>

An article alignment device pertaining to a first aspect of the invention aligns a plurality of articles, having a small thickness dimension compared to their longitudinal and transverse dimensions, so that parts of the articles lie in their thickness direction on top of parts of the articles adjacent thereto, the article alignment device comprising a first conveyor and a second conveyor. The first conveyor conveys the articles to a predetermined position in a first direction. The second conveyor conveys in a second direction the articles supplied from the first conveyor. The first conveyor and the second conveyor are disposed in such a way that the first direction and the second direction are orthogonal to each other. An article placement surface of the first conveyor is inclined with respect to a horizontal plane so that, when the articles transfer from the first conveyor to the second conveyor, the plane including the longitudinal and transverse directions of the articles is in an inclined state in which it is inclined taking the first direction as a rotational axis with respect to an article placement surface of the second conveyor.

In this article alignment device, the posture of the articles when the articles transfer from the first conveyor to the second conveyor is inclined in such a way that the portions of the articles that land on articles already placed on the second conveyor are higher and the portions of the articles that land directly on the second conveyor are lower, so the articles land on the second conveyor before or at the same time that they contact the articles that were placed on the second conveyor before them. Additionally, the frictional force between the second conveyor and the articles is greater than the frictional force between the articles, so sliding between the articles is prevented and posture disorderliness is inhibited.

An article alignment device pertaining to a second aspect of the invention is the article alignment device pertaining to the first aspect, wherein the article placement surface of the first conveyor and the article placement surface of the second conveyor are inclined with respect to a horizontal plane so that, when the articles transfer from the first conveyor to the second conveyor, the plane including the longitudinal and transverse directions of the articles is in an inclined state in which it is inclined taking the first direction as a rotational axis with respect to the article placement surface of the second conveyor.

An article alignment device pertaining to a third aspect of the invention is the article alignment device pertaining to the first aspect or the second aspect, wherein the inclined state is realized as a result of the first conveyor being inclined with respect to a horizontal plane and the second conveyor being inclined in the opposite direction of the direction of inclination of the first conveyor.

In this article alignment device, it is reasonable to toss the articles after arranging, on the first conveyor, their final landing posture, but in a case where it is difficult to realize the final landing posture with just the first conveyor, the second conveyor should also be inclined so that the posture seen from the second conveyor side becomes the final landing posture.

An article alignment device pertaining to a fourth aspect of the invention is the article alignment device pertaining to the second aspect, wherein the angle of inclination of the second conveyor is changed when the article at the front end of an article group to be aligned transfers.

In this article alignment device, the article at the front end of the line of the article group does not lean against another article, so it has a different landing posture from the subsequent articles. Hence, in terms of equipment, sometimes the landing posture needs to be varied between the article at the front end of the line and the subsequent articles. In that case, the best timing for changing the angle of inclination of the second conveyor is when the article at the rear end of a preceding line is discharged from the second conveyor and the article at the front end of a new line transfers to the second conveyor.

An article alignment device pertaining to a fifth aspect of the invention is the article alignment device pertaining to any one of the first aspect to the fourth aspect, wherein the relative height positions of the second conveyor and the first conveyor are changed in accordance with the size of the articles.

In this article alignment device, if the combination of the height positions of the first conveyor and the second conveyor is fixed for one article, equipment must be readied per product, which is unreasonable, but if the relative height positions of the second conveyor and the first conveyor can be changed in accordance with the size of the articles, a variety of products can be accommodated with the same equipment, making the device user-friendly.

An article alignment device pertaining to a sixth aspect of the invention is the article alignment device pertaining to any one of the first aspect to the fifth aspect, further comprising a control unit. The control unit controls the operation of the first conveyor and the second conveyor. A conveyance direction leading end portion of the first conveyor extends and contracts parallel to the conveyance direction. When the articles transfer from the predetermined position of the first conveyor to the second conveyor, the control unit changes the leading end portion of the first conveyor to a state in which the leading end portion is contracted to the conveyance direction upstream side of the predetermined position.

In this article alignment device, when the articles transfer from the first conveyor to the second conveyor, the first conveyor that had been supporting the undersurfaces of the articles contracts and is removed, so the articles have no time to incline and they land on the second conveyor while maintaining the posture they had during the transfer. As a result, posture disorderliness is inhibited.

An article alignment device pertaining to a seventh aspect of the invention is the article alignment device pertaining to any one of the first aspect to the sixth aspect, wherein the predetermined position of the first conveyor is positioned in a space directly above the article placement surface of the second conveyor.

In this article alignment device, the transfer of the articles from the first conveyor to the second conveyor is a drop from the first conveyor to the second conveyor, so it is preferred that the predetermined position of the first conveyor be positioned in the space directly above the article placement surface of the second conveyor.

An article alignment device pertaining to an eighth aspect of the invention is the article alignment device pertaining to any one of the first aspect to the seventh aspect, wherein the leading end portion of the first conveyor in the contracted state is positioned in a space upstream in the conveyance direction away from the space directly above the articles placed on the article placement surface of the second conveyor.

Normally, when the article leaves the conveyor, the balance between the portion of the article that left the conveyor first and the portion of the article that is still contacting the conveyor is disrupted, and the portion that left the conveyor first lands first and the posture of the article becomes disordered. Hence, in this article alignment device, the leading end portion of the first conveyor is completely removed from the space directly above the article placement surface of the second conveyor, whereby posture disorderliness is inhibited.

An article alignment device pertaining to a ninth aspect of the invention is the article alignment device pertaining to any one of the first aspect to the eighth aspect, wherein the first conveyor and the second conveyor are disposed in such a way that their conveyance directions are orthogonal to each other.

In this article alignment device, the first conveyor and the second conveyor are disposed in such a way that their conveyance directions are orthogonal to each other, so the conveyance direction can be inhibited from becoming long in the same direction, a wall can be provided in front of the first conveyor without obstructing the conveyance of the articles by the second conveyor, and the articles can be made to hit the wall to arrange their landing posture on the second conveyor.

An article alignment device pertaining to a tenth aspect of the invention is the article alignment device pertaining to any one of the first aspect to the ninth aspect, wherein the first conveyor and/or the second conveyor has the function of adjusting the relative height positions of the predetermined position of the first conveyor and the article placement surface of the second conveyor.

In this article alignment device, if the combination of the relative height positions of the predetermined position of the first conveyor and the article placement surface of the second conveyor is fixed for one article, equipment must be readied per product, which is unreasonable, but if the relative height positions can be changed in accordance with the size of the articles, a variety of products can be accommodated with the same equipment, making the device user-friendly.

An article alignment device pertaining to an eleventh aspect of the invention is the article alignment device pertaining to any one of the first aspect to the tenth aspect, wherein the leading end portion of the first conveyor is extensible/contractible in accordance with the size of the articles.

In this article alignment device, if the extension/contraction amount of the leading end portion of the first conveyor is fixed for one article, equipment must be readied per product, which is unreasonable, but if the control unit controls the extension/contraction of the leading end portion of the first conveyor in accordance with the size of the articles, a variety of products can be accommodated with the same equipment, making the device user-friendly.

An article alignment device pertaining to a twelfth aspect of the invention is the article alignment device pertaining to any one of the first aspect to the eleventh aspect, wherein the first conveyor has a support wall and a posture changing component. The support wall supports, along the conveyance direction, the articles on a direction-of-inclination lower side of the inclined surface. The posture changing component projects from the support wall side and hits parts of the articles being conveyed on the inclined surface to thereby change the planar conveyance posture of the articles.

In this article alignment device, the articles slide down in the direction of inclination because they receive the component force of gravity in the direction of inclination, but the articles move in the conveyance direction in a state in which they are supported by the support wall and come into abutment with the posture changing component. At that time, the articles transition to a posture in which they are rotated 90° while rotationally moving, but because they receive the component force downward in the direction of inclination on the inclined surface, the articles do not end up separating from the posture changing component while the articles are rotating. Additionally, the articles are not pushed out by a separate member, so there is also no need to provide a limit on the conveyance speed, and a high capacity can be accommodated.

An article alignment device pertaining to a thirteenth aspect of the invention is the article alignment device pertaining to the twelfth aspect, wherein the posture changing component has an angular portion that hits parts of the articles being conveyed.

In this article alignment device, in the abutment against the articles being conveyed, an angle applies thrust for 90° rotation more easily than a circular arc because it provides resistance to the conveyed articles.

An article alignment device pertaining to a fourteenth aspect of the invention is the article alignment device pertaining to the thirteenth aspect, wherein the posture changing component further has an article guide component that extends along the conveyance direction from the angular portion.

In this article alignment device, thrust for 90° rotation is applied to the articles as a result of the articles hitting the angular portion of the posture changing component, so the article guide component that extends along the conveyance direction from the angular portion catches the articles that have rotated 90° and maintains their posture after the 90° rotation.

An article alignment device pertaining to a fifteenth aspect of the invention is the article alignment device pertaining to any one of the twelfth aspect to the fourteenth aspect, wherein the posture changing component withdraws from over the conveyance surface when it is not necessary to change the posture of the articles on the conveyance surface.

In this article alignment device, when it is not necessary to change the posture of the articles on the conveyance surface, the posture changing component can be withdrawn from over the conveyance surface, so model accommodation is easy and the device is user-friendly.

### <Advantageous Effects of Invention>

In the article alignment device pertaining to the invention, the posture of the articles when the articles transfer from the first conveyor to the second conveyor is inclined in such a way that the portions of the articles that land on articles already placed on the second conveyor are higher and the portions of the articles that land directly on the second conveyor are lower, so the articles land on the second conveyor before or at the same time that they contact the articles that were placed on the second conveyor before them. Additionally, the frictional force between the second conveyor and the articles is greater than the frictional force between the articles, so sliding between the articles is prevented and posture disorderliness is inhibited.

### BRIEF DESCRIPTION OF DRAWINGS

FIG. 1 is a block diagram of a box packing system equipped with an article alignment device pertaining to an embodiment of the invention.
FIG. 2 is a perspective view showing a flow of cardboard boxes and articles in the box packing system.
FIG. 3A is a front view seen from the horizontal direction orthogonal to a conveyance direction of an aligned group of bags.
FIG. 3B is a front view of a state in which the aligned group of bags of FIG. 3A has been made to stand up.
FIG. 4 is a perspective view showing the arrangement of an input conveyor, a first aligning conveyor, and a second aligning conveyor.
FIG. 5 is a front view of the arrangement of the input conveyor, the first aligning conveyor, and the second aligning conveyor seen from a position opposing the conveyance direction of the bags on the input conveyor.
FIG. 6A is a front view when the posture of a bag when the bag drops from the input conveyor is seen along the direction of inclination of the input conveyor.
FIG. 6B is a front view when the posture of a bag G when the bag G drops from the input conveyor is seen along the direction of inclination of the input conveyor in a case where a contact surface between the input conveyor and the bag G is instantaneously removed.
FIG. 7 is a perspective view of the input conveyor, the first aligning conveyor, and the second aligning conveyor in a state in which the contact surface between the input conveyor and the bag of FIG. 4 is instantaneously removed.
FIG. 8A is a perspective view showing a bag before a posture changing operation on the input conveyor.
FIG. 8B is a perspective view showing the bag in the middle of the posture changing operation on the input conveyor.
FIG. 8C is a perspective view showing the bag after completion of the posture changing operation on the input conveyor.

### DESCRIPTION OF EMBODIMENT

An embodiment of the invention will be described below with reference to the drawings. It will be noted that the following embodiment is a specific example of the invention and is not intended to limit the technical scope of the invention.

### (1) Configuration of Box Packing System 1

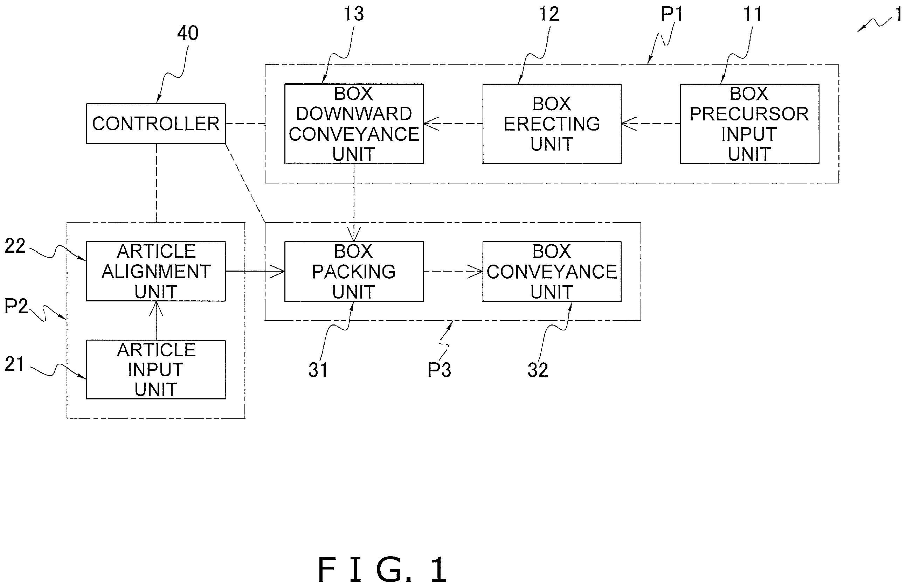

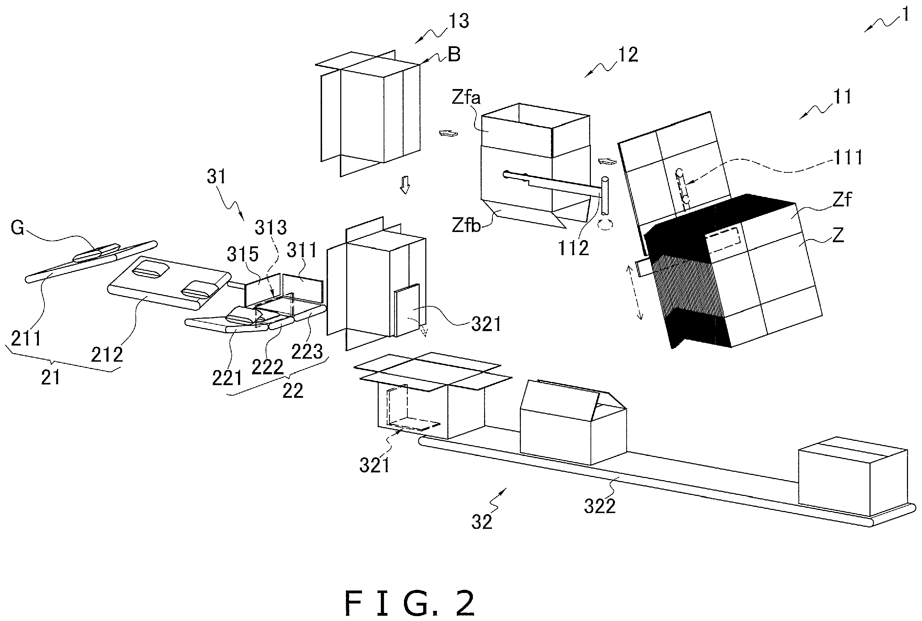

FIG. 1 is a block diagram of a box packing system 1 equipped with an article alignment device pertaining to an embodiment of the invention. Furthermore, FIG. 2 is a perspective view showing a flow of cardboard boxes B and articles in the box packing system 1. In FIG. 1, the box packing system 1 is a system that packs a fixed number of bagged products (bags G) such as snack foods, for example, in an aligned state and in multiple layers into the cardboard boxes B.

As shown in FIG. 1, three processes, a case forming process P1, an article alignment process P2, and a box packing process P3, work together in the box packing system 1.

The case forming process P1 is a process of erecting sheet-like cardboard box precursors Z into the cardboard boxes B and conveying the cardboard boxes B to a box packing position, and is configured by a box precursor input unit 11, a box erecting unit 12, and a box downward conveyance unit 13.

The article alignment process P2 is a process of conveying to a predetermined position the bags G supplied from an upstream process, aligning a fixed number of the bags G in such a way that adjacent bags partially lie on top of each other, and conveying the aligned bags G to the box packing position, and is configured by an article input unit 21 and an article alignment unit 22.

The box packing process P3 is a process of packing, into the cardboard boxes B that have been conveyed thereto from the case forming process P1, a fixed quantity of bags G that have finished being aligned in the article alignment process P2, closing the boxes, and conveying the boxes to a box output position, and is configured by a box packing unit 31 and a box conveyance unit 32.

The box packing system 1 performs multilayer packing of the bags G into the cardboard boxes B, and the posture of the bags G inside the boxes B is a "standing posture." That is, the standing posture is a posture where, when openings of the boxes B face upward, the front sides and the back sides of the bags G face sideways, the upper and lower end portions of the bags G face upward and downward, and the left and right side portions of the bags G face sideways.

### (1-1) Case Forming Process P1

As shown in FIG. 1, the case forming process P1 is configured by the box precursor input unit 11 that introduces the cardboard box precursors Z to the box packing system 1, the box erecting unit 12 that erects the cardboard boxes B, and the box downward conveyance unit 13 that changes the posture of the cardboard boxes B so that openings and top flaps Zfa of the cardboard boxes B lie in the same vertical plane and conveys the cardboard boxes B downward.

### (1-1-1) Box Precursor Input Unit 11

The box precursor input unit 11, as shown in FIG. 2, picks one at a time and transports upward the cardboard box precursor Z at the very front of the cardboard box precursors Z stacked in a supply position and rotates the transported cardboard box precursor Z 90° about a vertical axis to thereby open it into a tubular shape.

The cardboard box precursors Z are placed in the supply position by a worker. The cardboard box precursors Z are collapsed with their flaps Zf open and are stacked in a horizontal direction in a posture in which their flaps Zf are positioned in the vertical direction. It will be noted that for convenience of description the flaps Zf on the top surface side will be called top flaps Zfa and the flaps Zf on the bottom surface side will be called bottom flaps Zfb.

The upward transport of the cardboard box precursors Z is performed by a lift mechanism 111, and when all the cardboard box precursors Z in the supply position run out, a detection sensor (not shown in the drawings) sends a detection signal to a controller 40 (see FIG. 1).

Furthermore, the rotation of the cardboard box precursors Z about the vertical axis is realized by using a sucking and rotating mechanism 112 to suck and hold, with suckers, the side surfaces of the cardboard box precursors Z and using a motor (not shown in the drawings) to cause the sucking and rotating mechanism 112 to rotate 90° about the vertical axis.

### (1-1-2) Box Erecting Unit 12

The box erecting unit 12 conveys in a horizontal direction the cardboard box precursors Z that have been opened into a tubular shape and at the same time folds and tapes the bottom flaps Zfb of the cardboard box precursors Z to thereby erect the cardboard boxes B that are in a state in which the top flaps Zfa are open.

### (1-1-3) Box Downward Conveyance Unit 13

The box downward conveyance unit 13 rotates the cardboard boxes B 90° about a horizontal axis orthogonal to the conveyance direction, thereby changing the posture of the cardboard boxes B so that the openings and the top flaps Zfa and the bottom flaps Zfb of the cardboard boxes B lie in the same vertical plane, and then conveys the cardboard boxes B downward. That is, the box downward conveyance unit 13 moves the cardboard boxes B downward while maintaining the cube shape of the cardboard boxes B formed by the box erecting unit 12.

### (1-2) Article Alignment Process

Disposed in an upstream process in the flow of the bags G in the box packing system 1 are a weigher and a bag-making and packaging machine not shown in the drawings. Additionally, only bags G that have passed weight, seal, and contamination inspections in the upstream process are supplied to the box packing system 1.

The article alignment process P2 is configured by the article input unit 21, which accepts the bags G and conveys them to the predetermined position, and the article alignment unit 22, which aligns the bags G supplied from the article input unit 21.

### (1-2-1) Article Input Unit 21

The article input unit 21 has an article introducing conveyor 211 and an input conveyor 212. The article introducing conveyor 211 receives, downstream of the process that performs the weight, seal, and contamination inspections, the supply of the bags G that have passed the inspections and guides those bags G to the input conveyor 212.

The input conveyor 212 conveys to the article alignment unit 22 the bags G conveyed thereto from the article introducing conveyor 211. It will be noted that details regarding the input conveyor 212 will be described in the latter half.

### (1-2-2) Article Alignment Unit 22

The article alignment unit 22 has a first aligning conveyor 221, a second aligning conveyor 222, and a third aligning conveyor 223. In order for the first aligning conveyor 221 to receive the bags G that drop from the input conveyor 212, one end of the first aligning conveyor 221 is set in a lower position than the height of the leading end portion of the input conveyor 212, and the other end of the first aligning conveyor 221 is set in the height position of the second aligning conveyor 222.

It will be noted that it is preferred that the leading end portion of the input conveyor 212 be positioned in a space directly above an article placement surface of the first aligning conveyor 221. Here, the article placement surface is the surface-of the conveyance surface of the first aligning conveyor 221-that waits to receive the bags G that drop thereto.

Additionally, each time the first aligning conveyor 221 catches one bag G, it conveys the bag G a fixed distance L toward the second aligning conveyor 222. Hence, the bag G moves the fixed distance L closer to the second aligning conveyor 222 from the position where it dropped. Meanwhile, part of the bag G that drops thereafter lands on the first aligning conveyor 221, and the remaining part leans against the preceding bag G and becomes inclined.

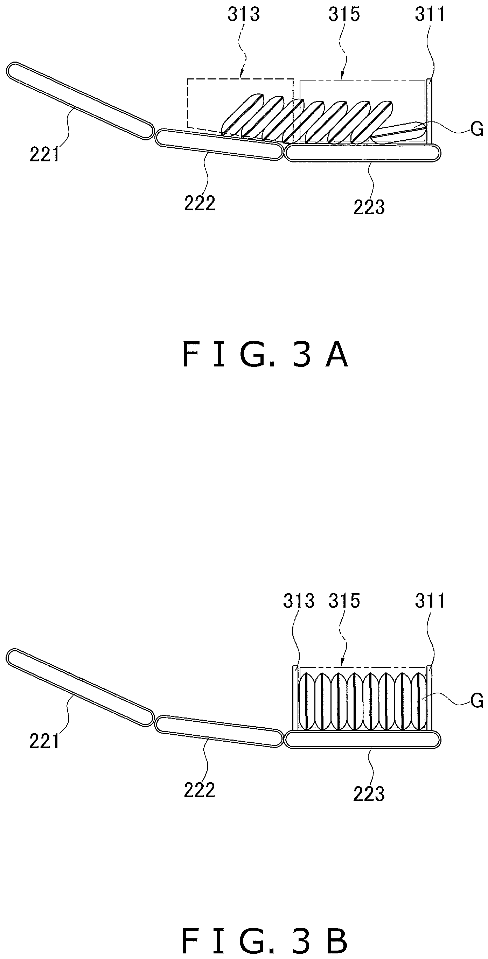

For example, in the case of aligning N=8 bags G as a group such as shown in FIG. 3A and FIG. 3B described later, the bag G at the front end is ahead a length of 7L from the position where the bag G at the rear end lands, so in the present embodiment at least four (N/2) bags G from the front end of the line arrive on the second aligning conveyor 222. It will be noted that the number of the bags G that arrive on the second aligning conveyor 222 changes depending on the size of the bags G and the lengths of the conveyors, for example, so it is not limited to the numerical value of "four from the front end of the line" in the present embodiment.

Furthermore, the bags G on the first aligning conveyor 221 and the second aligning conveyor 222 form a line in such a way that mutually adjacent bags partially lie on top of each other.

After the bag G at the rear end of the line has landed on the first aligning conveyor 221, the second aligning conveyor 222 and the third aligning conveyor 223 start operating, and the first aligning conveyor 221, the second aligning conveyor 222, and the third aligning conveyor 223 perform a conveyance operation in the same direction. Hence, the N-number of the bags G aligned in a line on the first aligning conveyor 221 and the second aligning conveyor 222 move in unison to the third aligning conveyor 223 and advance on the third aligning conveyor 223.

It will be noted that in the present embodiment the conveyance direction of the input conveyor 212 is disposed so as to be orthogonal to the conveyance direction of the first aligning conveyor 221, the second aligning conveyor 222, and the third aligning conveyor 223. For that reason, the conveyance direction can be inhibited from becoming longer in the same direction, and a wall can be provided in front of the input conveyor 212 without obstructing the conveyance of the bags G by the first aligning conveyor 221, the second aligning conveyor 222, and the third aligning conveyor 223, so the bags G can be made to hit the wall to arrange their landing posture on the first aligning conveyor 221.

### (1-3) Box Packing Process P3

The box packing process P3 has the box packing unit 31, which packs the bags G into the cardboard boxes B, and the box conveyance unit 32, which conveys the cardboard boxes B that have finished being packed with the bags G.

### (1-3-1) Box Packing Unit 31

The box packing unit 31 sandwiches the bag G at the front end and the bag G at the rear end of the group of bags G aligned in a line by the third aligning conveyor 223 and inserts the whole group of bags G into the cardboard boxes B. As shown in FIG. 2, the box packing unit 31 has a blocking plate 311, a push plate 313, and an insertion plate 315 to sandwich the aligned group of bags G.

The blocking plate 311 is provided on the downstream end of the third aligning conveyor 223 and blocks the advance of the bags G forming a line and being conveyed thereto. The blocking plate 311 is disposed in such a way that its flat surface portion is always orthogonal to the conveyance direction of the bags G.

FIG. 3A is a front view seen from the horizontal direction orthogonal to the conveyance direction of the aligned group of bags G. Furthermore, FIG. 3B is a front view of a state in which the aligned group of bags G of FIG. 3A has been made to stand up. In FIG. 3A and FIG. 3B, the push plate 313 pushes the bag G at the rear end of the N-number of bags G aligned in a line to thereby sandwich the bags G between itself and the blocking plate 311 and cause the bags G to stand up.

The push plate 313 is provided on the upstream end of the third aligning conveyor 223, but while the line of bags G is moving from the second aligning conveyor 222 to the third aligning conveyor 223, the push plate 313 is accommodated on the side of the third aligning conveyor 223 so that its flat surface portion is parallel to the conveyance direction of the bags G. Furthermore, when the bag G at the rear end of the line has completely transferred from the second aligning conveyor 222 to the third aligning conveyor 223, the push plate 313 swings so that its flat surface portion becomes orthogonal to the conveyance direction of the bags G. Moreover, the push plate 313 pushes the bag G at the rear end of the line to thereby push the entire line against the blocking plate 311.

At this time, because the blocking plate 311 is stationary, the bag G at the front end of the line stands up along the flat surface portion of the blocking plate 311, and the next bag G stands up along the bag at the front end that has been made to stand up. The subsequent bags G also successively stand up because of the same operation, so the N-number of bags G become aligned in the standing state.

Furthermore, the box packing unit 31 collectively pushes, via the insertion plate 315, the N-number of bags G in the standing state into the cardboard boxes B. The insertion plate 315 is positioned on the opposite side of the position of the cardboard boxes B across the third aligning conveyor 223. When viewed from the second aligning conveyor 222 side, the open surfaces of the cardboard boxes B are positioned on the right side of the third aligning conveyor 223 and the insertion plate 315 is positioned on the left side of the third aligning conveyor 223.

The insertion plate 315 stands by with its flat surface portion opposing the openings of the cardboard boxes B, and after the N-number of bags G have been switched to the standing state, the insertion plate 315 pushes the N-number of bags G toward the open surfaces of the cardboard boxes B and in one fell swoop inserts the N-number of bags G through the openings to the bottoms of the cardboard boxes B. The insertion plate 315 crosses between the blocking plate 311 and the push plate 313 and advances to the open surfaces of the cardboard boxes B.

### (1-3-2) Box Conveyance Unit 32

The box conveyance unit 32 has a posture changing mechanism 321, which changes the posture of the cardboard boxes B packed with the bags G, and an output conveyor 322, which conveys the cardboard boxes B.

The posture changing mechanism 321 rotates the cardboard boxes B so that the open surfaces that until then had been vertical become horizontal, namely, so that the open surfaces face upward. The posture changing mechanism 321 uses an L-shaped member with suckers that simultaneously suck the side surface and the bottom surface of the cardboard boxes B to hold the cardboard boxes B, and when the L-shaped member rotates 90°, the cardboard boxes B rotate.

When the posture changing mechanism 321 has rotated the cardboard boxes B 90°, the posture changing mechanism 321 places the cardboard boxes B on the output conveyor 322 in a state in which the open surfaces face upward. The output conveyor 322 conveys the cardboard boxes B to a predetermined position, but before the cardboard boxes B reach the predetermined position, the top flaps Zfa are folded inward to close the open surfaces and taping is completed.

### (2) Adjustment of Posture of Bags G

As described in the article alignment process P2, each time the first aligning conveyor 221 catches one bag G, it conveys the bag G the fixed distance L toward the second aligning conveyor 222, so part of the bag G lands on the first aligning conveyor 221, the remaining part of the bag G leans against the bag G before it and becomes inclined, and the bags G form a line so that mutually adjacent bags G partially lie on top of each other.

Conventionally, sometimes, just before a bag G dropped from the input conveyor 212 lands on the first aligning conveyor 221, the dropped bag G has contacted and slidingly moved on an article that was dropped before it, so that the posture of the dropped bag G has become disordered. This is because when the bag G being horizontally conveyed drops as is in a horizontal posture, the subsequent bag G drops directly on the upper surface of the bag G standing by, so the dropped bag G bounces in a direction different from its intended position.

### (2-1) Inclination of Input Conveyor 212 and First Aligning Conveyor 221

Thus, in the present embodiment, the input conveyor 212 is inclined in such a way that the posture of the bags G is a posture suited for landing on the first aligning conveyor 221 from the stage when the bags G are being conveyed by the input conveyor 212.

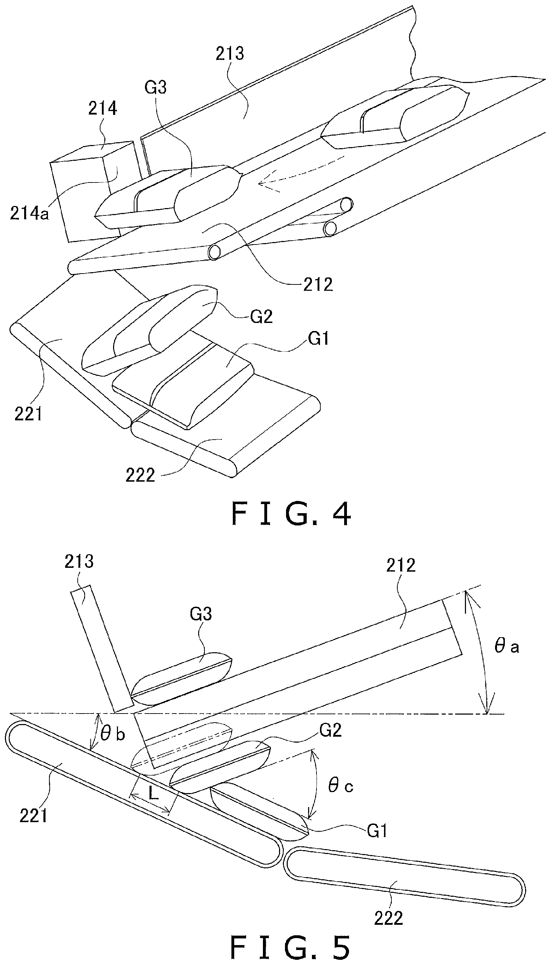

FIG. 4 is a perspective view showing the arrangement of the input conveyor 212, the first aligning conveyor 221, and the second aligning conveyor 222. Furthermore, FIG. 5 is a front view of the arrangement of the input conveyor 212, the first aligning conveyor 221, and the second aligning conveyor 222 seen from a position opposing the conveyance direction of the bags G on the input conveyor 212.

In FIG. 4 and FIG. 5, the conveyance surface of the input conveyor 212 is inclined with respect to a horizontal plane, and a support wall 213 that supports the bags G to prevent them from falling off and guides the bags G in the conveyance direction is provided on the direction-of-inclination lower end of the conveyance surface. The bags G that move on the direction-of-inclination upper side of the conveyance surface receive the component force of gravity along the direction of inclination, so the bags G slide down toward the support wall 213 while moving and then move along the support wall 213.

Furthermore, the conveyance surface of the input conveyor 212 is inclined an angle θa about a virtual axis parallel to the conveyance direction and in a counter-clockwise direction with respect to a horizontal plane as seen in the front view of FIG. 5. Moreover, the conveyance surface of the first aligning conveyor 221 is inclined an angle θb about the virtual axis and in a clockwise direction with respect to the horizontal plane.

As for the angle of inclination θa of the conveyance surface of the input conveyor 212, if θc denotes the relative angle between a bag G1 that dropped first onto the first conveyor 221 as the front end of a line of bags G and a bag G2 that dropped next, the angle of inclination θa of the conveyance surface of the input conveyor 212 is set so that <θc = θa + θb>.

Because the angle θa is set in this way, the posture of a bag G3 when the bag G3 transfers from the input conveyor 212 to the first aligning conveyor is inclined in such a way that the portion of the bag G3 that lands on the bag G2 already placed on the first aligning conveyor 221 is higher and the portion of the bag G3 that lands directly on the first aligning conveyor 221 is lower, so the bag G3 lands on the conveyance surface of the first aligning conveyor 221 before or at the same time that it contacts the bag G2 that was placed on the first aligning conveyor 221 before it. At this time, the frictional force between the first aligning conveyor 221 and the bag G3 is greater than the frictional force between the bag G3 and the bag G2, so sliding when the bag G3 lands is inhibited and posture disorderliness is avoided.

### (2-2) Extension/Contraction of Leading End Portion of Input Conveyor 212

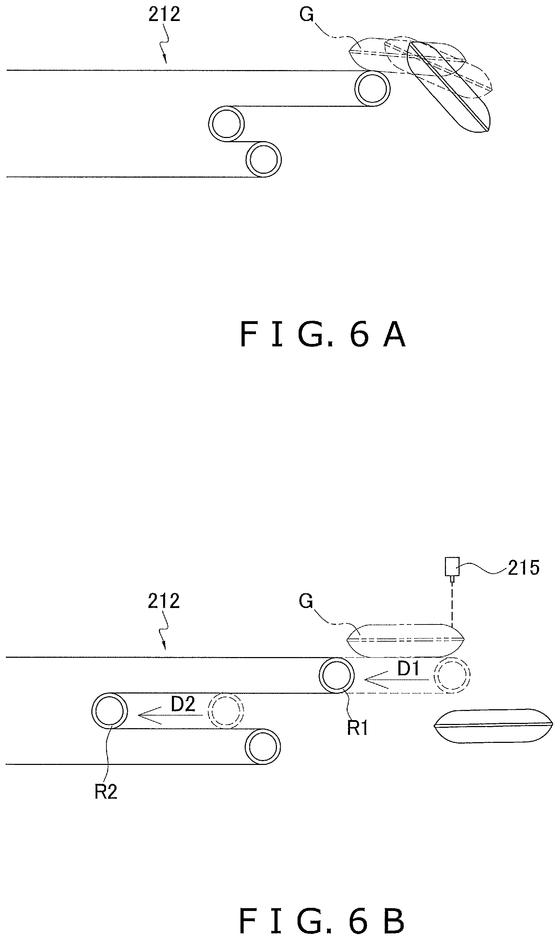

FIG. 6A is a front view when the posture of a bag G when the bag G drops from the input conveyor 212 is seen along the direction of inclination of the input conveyor 212. In FIG. 6A, normally, when the bag G that drops leaves the input conveyor 212, the balance between the portion of the bag G that left the input conveyor 212 first and the portion of the bag G that is still contacting the input conveyor 212 is disrupted, and the portion of the bag G that left first lands first and the posture of the bag G becomes disordered. An ideal drop is one where the bag G drops while maintaining the posture it has when the bag G is being conveyed on the input conveyor 212.

Thus, in the present embodiment, when the bag G reaches the predetermined position of the input conveyor 212, the contact surface between the input conveyor 212 and the bag G is instantaneously removed, thereby depriving the bag G of the opportunity for its posture to become inclined and maintaining the posture that the bag G has during conveyance.

FIG. 6B is a front view when the posture of the bag G when the bag G drops from the input conveyor 212 is seen along the direction of inclination of the input conveyor 212 in a case where the contact surface between the input conveyor 212 and the bag G is instantaneously removed.

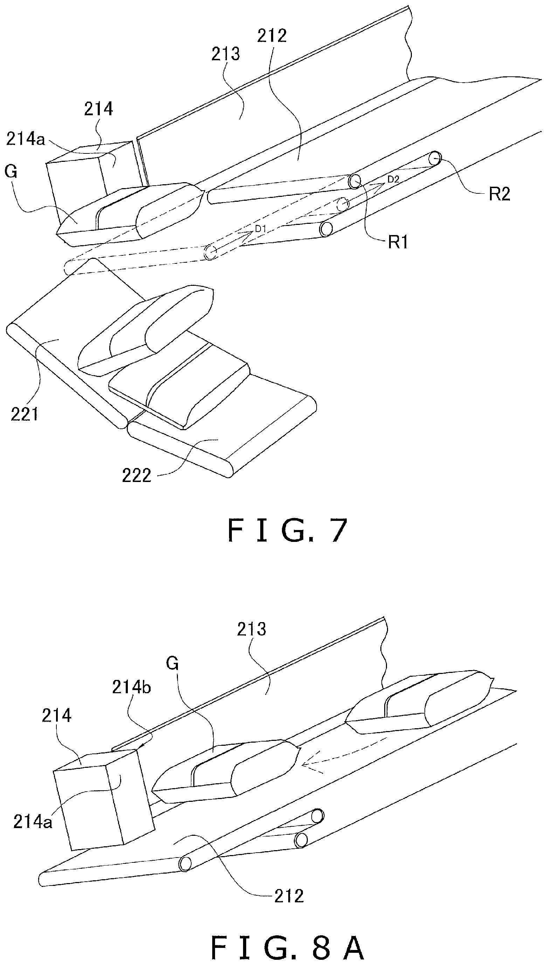

Furthermore, FIG. 7 is a perspective view of the input conveyor 212, the first aligning conveyor 221, and the second aligning conveyor 222 in a state in which the contact surface between the input conveyor 212 and the bag G of FIG. 4 is instantaneously removed.

In FIG. 6B and FIG. 7, the bag G is conveyed to the downstream side of the input conveyor 212, and when an article detection sensor 215 detects that the leading end portion of the bag G has reached the leading end portion of the input conveyor 212, a leading end portion roller R1 of the input conveyor 212 moves in the direction of arrow D1. At this time, an intermediate roller R2 of the input conveyor 212 moves in the direction of arrow D2, thereby absorbing slack in the conveyor belt when the leading end portion roller R1 moves in the direction of arrow D1.

The leading end portion of the input conveyor 212 in a state in which the leading end portion roller R1 has moved in the direction of arrow D1 is positioned in a space away from the space directly above the bag G placed on the conveyance surface of the first aligning conveyor 221.

That is, the leading end portion of the input conveyor 212 instantaneously moves to the upstream side of the bag G, so the bag G suddenly loses the drag from the conveyance surface of the input conveyor 212 but maintains the posture it has during conveyance because of inertia, so the bag G becomes less likely to take a posture such as shown in FIG. 6A where the leading end of the bag G drops first.

Hence, the landing posture on the first aligning conveyor 221 is easily maintained when the bag G leaves the input conveyor 212, and posture disorderliness when the bag G lands is inhibited.

In the present embodiment, the moving distance of the leading end portion roller R1 of the input conveyor 212 is controlled by the controller 40. Hence, the extension/contraction distance of the leading end portion of the input conveyor 212 is adjusted in accordance with the size of the bags G. Hence, it becomes possible to accommodate a variety of products with the same equipment.

### (3) Changing Posture of Bags G

Depending on the box packing specifications, there are cases where the bags G being conveyed by the input conveyor 212 need to be planarly rotated 90°.

The present embodiment follows the conventional method of applying a member (posture changing member) that blocks conveyance to the end portion of the front end of the bag G and causing the bag to rotate using the member as a fulcrum, but because the conveyance surface of the input conveyor 212 is inclined the angle θa about a virtual axis parallel to the conveyance direction and in a counter-clockwise direction with respect to a horizontal plane as seen in the front view of FIG. 5, the embodiment overcomes the conventional problem that "the bag G ends up separating from the fulcrum while the bag G is rotating."

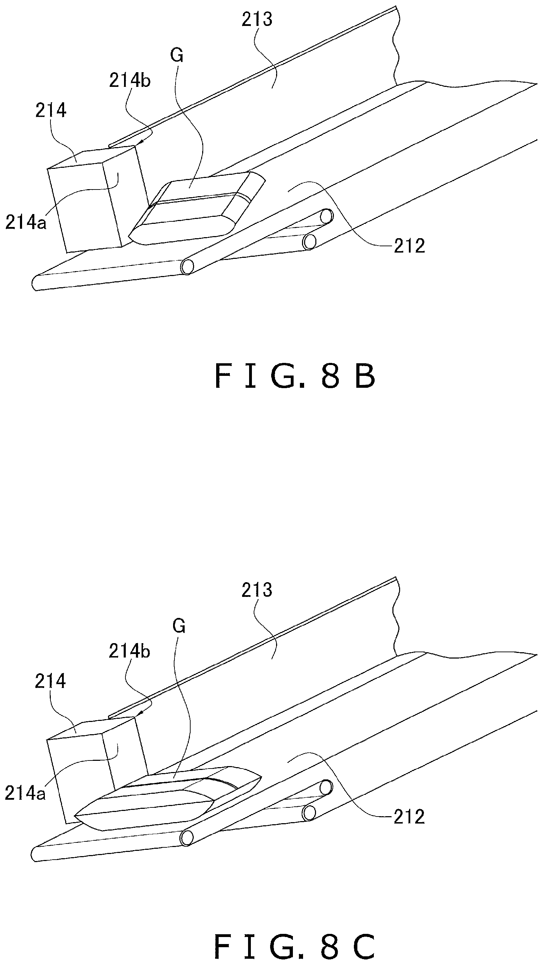

FIG. 8A is a perspective view showing a bag G before a posture changing operation on the input conveyor 212. Furthermore, FIG. 8B is a perspective view showing the bag G in the middle of the posture changing operation on the input conveyor 212. Moreover, FIG. 8C is a perspective view showing the bag G after completion of the posture changing operation on the input conveyor 212.

In FIG. 8A, the conveyance surface of the input conveyor 212 is inclined with respect to a horizontal plane and the support wall 213 is provided on the direction-of-inclination lower end of the conveyance surface, so the bag G that moves on the direction-of-inclination upper side of the conveyance surface receives the component force of gravity along the direction of inclination, slides down toward the support wall 213 while moving, and then moves along the support wall 213.

In FIG. 8B, the bag G moves along the support wall 213, but the bag G contacts a corner portion 214b of a posture changing member 214 that projects from the support wall 213 side and continues to be conveyed even though advance of the bag G is blocked, so the bag G rotates with that point of contact as a fulcrum.

When it is not necessary to change the posture of the bag G, the posture changing member 214 stands with its guide surface 214a flush with the wall surface of the support wall 214 as shown in FIG. 4. Then, when it is necessary to change the posture of the bag G, the posture changing member 214 is made to project onto the conveyance surface side of the input conveyor 212 from the wall surface of the support wall 213. The operation of causing the posture changing member 214 to project is carried out by a motor (not shown in the drawings).

The corner portion 214b of the posture changing member 214 that the bags G hit may be a fillet or an angle, but angle applies thrust for 90° rotation more easily than a circular arc because it provides resistance to the conveyed articles. However, in the present embodiment, a fillet is employed to prevent the corner portion 214b from getting wedged into the bags G.

In FIG. 8A to FIG. 8C, the posture changing member 214 is formed in the shape of a block, but it may also be sheet metal bent in a L-shape.

Centrifugal force in a direction in which the bag G separates from the fulcrum acts on the bag G during rotation, but because the bag G receives the component force of gravity along the direction of inclination, the bag G rotates without separating from the fulcrum.

In FIG. 8C, when the bag G has rotated 90°, a transverse seal-side end portion of the bag G becomes supported by the guide surface 214a of the posture changing member 214. Then, the bag G moves along the guide surface 214a of the posture changing member 214.

The operation thereafter is the same as what has already been described.

### (4) Example Modifications

### (4-1)

The angle of inclination θb of the first aligning conveyor 221 can also be changed when the bag G at the front end of a group of bags G to be aligned transfers thereto.

The bag G at the front end of the line does not lean against another bag G, so its landing posture is different from those of the subsequent bags G. Hence, in terms of equipment, sometimes the landing posture needs to be varied between the bag G at the front end and the subsequent bags G. In that case, the best timing for changing the angle of inclination of the first aligning conveyor 221 is when the bag G at the rear end of a preceding line is discharged from the first aligning conveyor 221 and the bag G at the front end of a new line transfers to the first aligning conveyor 221.

### (4-2)

The relative height positions of the leading end portion of the input conveyor 212 and the article placement surface of the first aligning conveyor 221 can be changed in accordance with the size of the bags G. If the combination of the height positions of the input conveyor 212 and the first aligning conveyor is fixed for one product, the equipment must be readied per product, which is unreasonable. However, the relative height positions of the input conveyor 212 and the first aligning conveyor 221 can be changed in accordance with the size of the products (bags G), so a variety of products can be accommodated with the same equipment, making the device user-friendly.

### (5) Characteristics

### (5-1)

The posture of the bags G when the bags G transfer from the input conveyor 212 to the first aligning conveyor 221 is inclined in such a way that the portions of the bags G that land on bags G already placed on the first aligning conveyor 221 are higher and the portions of the bags G that land directly on the first aligning conveyor 221 are lower, so the bags G land on the first aligning conveyor 221 before or at the same time that they contact the bags G that were placed on the first aligning conveyor 221 before them. Additionally, the frictional force between the first aligning conveyor 221 and the bags G is greater than the frictional force between the bags G, so sliding between the bags G is prevented and posture disorderliness is inhibited.

This is effective particularly in an article alignment device that aligns a plurality of articles, having a small thickness dimension compared to their longitudinal and transverse dimensions, so that parts of the articles lie in their thickness direction on top of parts of the articles adjacent thereto.

### (5-2)

It is reasonable to toss the bags after arranging, on the input conveyor 212, their final landing posture, but in a case where it is difficult to realize the final landing posture with just the input conveyor 212, the first aligning conveyor 221 should also be inclined so that the posture seen from the first aligning conveyor 221 side becomes the final landing posture.

### (5-3)

The bag G at the front end of the line of the bags G does not lean against another bag G, so it has a different landing posture from the subsequent bags G. Hence, in terms of equipment, sometimes the landing posture needs to be varied between the bag G at the front end of the line and the subsequent bags G. In that case, the best timing for changing the angle of inclination of the first aligning conveyor 221 is when the bag G at the rear end of a preceding line is discharged from the first aligning conveyor 221 and the bag G at the front end of a new line transfers to the first aligning conveyor 221.

### (5-4)

If the combination of the height positions of the input conveyor 212 and the first aligning conveyor 221 is fixed for one product, equipment must be readied per product, which is unreasonable, but if the relative height positions of the first aligning conveyor 221 and the input conveyor 212 can be changed in accordance with the size of the products, a variety of products can be accommodated with the same equipment, making the device user-friendly.

### (5-5)

When the bags G transfer from the input conveyor 212 to the first aligning conveyor 221, the input conveyor 212 that had been supporting the undersurfaces of the bags G is contracted and removed, whereby the bags G have no time to incline and they land on the first aligning conveyor 221 while maintaining the posture they had during the transfer, so posture disorderliness is inhibited.

### (5-6)

The transfer of the bags G from the input conveyor 212 to the first aligning conveyor 221 is a drop from the input conveyor 212 to the first aligning conveyor 221, so it is preferred that the leading end portion of the input conveyor 212 be positioned in the space directly above the article placement surface of the first aligning conveyor 221. Additionally, when the bags G reach the front of the drop position, the leading end portion of the input conveyor 212 is completely removed from the space directly above the article placement surface of the first aligning conveyor 221, whereby the bags G drop while maintaining the posture they had in front of the drop position, so posture disorderliness is inhibited.

### (5-7)

The input conveyor 212 and the first aligning conveyor 221 are disposed in such a way that their conveyance directions are orthogonal to each other, so the conveyance direction can be inhibited from becoming long in the same direction, a wall can be provided in front of the input conveyor 212 without obstructing the conveyance of the bags G by the first aligning conveyor 221, and the articles can be made to hit the wall to arrange their landing posture on the first aligning conveyor 221.

### (5-8)

If the combination of the relative height positions of the leading end portion of the input conveyor 212 and the article placement surface of the first aligning conveyor 221 is fixed for one product, equipment must be readied per product, which is unreasonable, but if the relative height positions can be changed in accordance with the size of the products, a variety of products can be accommodated with the same equipment, making the device user-friendly.

### (5-9)

If the extension/contraction amount of the leading end portion of the input conveyor 212 is fixed for one product, equipment must be readied per product, which is unreasonable, but if the control unit controls the extension/contraction of the leading end portion of the first conveyor in accordance with the size of the products, a variety of products can be accommodated with the same equipment, making the device user-friendly.

### (5-10)

In the input conveyor 212, the bags G slide down in the direction of inclination because they receive the component force of gravity in the direction of inclination, but the bags G move in the conveyance direction in a state in which they are supported by the support wall 214 and come into abutment with the posture changing member 214. At that time, the bags G transition to a posture in which they are rotated 90° while rotationally moving, but because they receive the component force downward in the direction of inclination on the inclined surface, the bags G do not end up separating from the posture changing member 214 while the bags G are rotating. Additionally, the bags G are not pushed out by a separate member, so there is also no need to provide a limit on the conveyance speed, and a high capacity can be accommodated.

### (5-11)

In the input conveyor 212, thrust for 90° rotation is applied to the bags G as a result of the bags G hitting the corner portion 214b of the posture changing member 214, so the guide surface 214a that extends along the conveyance direction from the corner portion 214b catches the bags G that have rotated 90° and maintains their posture after the 90° rotation.

### (5-12)

In the input conveyor 212, when it is not necessary to change the posture of the bags G on the conveyance surface, the posture changing member 214 can be withdrawn from over the conveyance surface, so model accommodation is easy and the device is user-friendly.

### REFERENCE SIGNS LIST

- 1: Box Packing System
- 40: Controller (Control Unit)
- 212: Input Conveyor (First Conveyor)
- 213: Support Wall
- 214: Posture Changing Member (Posture Changing Component)
- 214a: Guide Surface (Article Guide Component)
- 214b: Corner Portion (Angular Portion)
- 221: First Aligning Conveyor (Second Conveyor)
- G: Bags (Articles)

### CITATION LIST

### Patent Literature

Patent Document 1: JP-ANo. 2009-280279

## Claims

1. An article alignment device that aligns a plurality of articles, having a small thickness dimension compared to their longitudinal and transverse dimensions, so that parts of the articles lie in their thickness direction on top of parts of the articles adjacent thereto, the article alignment device comprising:
a first conveyor that conveys the articles to a predetermined position in a first direction; and
a second conveyor that receives the articles supplied from the predetermined position and, while conveying the articles in a second direction, aligns the articles,
wherein the first conveyor and the second conveyor are disposed in such a way that the first direction and the second direction are orthogonal to each other, and
an article placement surface of the first conveyor is inclined with respect to a horizontal plane so that, when the articles transfer from the first conveyor to the second conveyor, the plane including the longitudinal and transverse directions of the articles is in an inclined state in which it is inclined taking the first direction as a rotational axis with respect to an article placement surface of the second conveyor.

2. The article alignment device according to claim 1, wherein the article placement surface of the first conveyor and the article placement surface of the second conveyor are inclined with respect to a horizontal plane so that, when the articles transfer from the first conveyor to the second conveyor, the plane including the longitudinal and transverse directions of the articles is in an inclined state in which it is inclined taking the first direction as a rotational axis with respect to the article placement surface of the second conveyor.

3. The article alignment device according to claim 1 or claim 2, wherein the inclined state is realized as a result of the first conveyor being inclined with respect to a horizontal plane and the second conveyor being inclined in the opposite direction of the direction of inclination of the first conveyor.

4. The article alignment device according to claim 2, wherein the angle of inclination of the second conveyor is changed when the article at the front end of an article group to be aligned transfers.

5. The article alignment device according to any one of claim 1 to claim 4, wherein the relative height positions of the second conveyor and the first conveyor are changed in accordance with the size of the articles.

6. The article alignment device according to any one of claim 1 to claim 5, further comprising a control unit that controls the operation of the first conveyor and the second conveyor, wherein
a conveyance direction leading end portion of the first conveyor extends and contracts parallel to the conveyance direction, and
when the articles transfer from the predetermined position of the first conveyor to the second conveyor, the control unit changes the leading end portion of the first conveyor to a state in which the leading end portion is contracted to the conveyance direction upstream side of the predetermined position.

7. The article alignment device according to any one of claim 1 to claim 6, wherein the predetermined position of the first conveyor is positioned in a space directly above the article placement surface of the second conveyor.

8. The article alignment device according to any one of claim 1 to claim 7, wherein the leading end portion of the first conveyor in the contracted state is positioned in a space upstream in the conveyance direction away from the space directly above the articles placed on the article placement surface of the second conveyor.

9. The article alignment device according to any one of claim 1 to claim 8, wherein the first conveyor and the second conveyor are disposed in such a way that their conveyance directions are orthogonal to each other.

10. The article alignment device according to any one of claim 1 to claim 9, wherein the first conveyor and/or the second conveyor has the function of adjusting the relative height positions of the predetermined position of the first conveyor and the article placement surface of the second conveyor.

11. The article alignment device according to any one of claim 1 to claim 10, wherein the leading end portion of the first conveyor is extensible/contractible in accordance with the size of the articles.

12. The article alignment device according to any one of claim 1 to claim 11, wherein the first conveyor has
a support wall that supports, along the conveyance direction, the articles on a direction-of-inclination lower side of the article placement surface and
a posture changing component that projects from the support wall side and hits parts of the articles being conveyed on an inclined surface of the article placement surface to thereby change the planar conveyance posture of the articles.

13. The article alignment device according to claim 12, wherein the posture changing component has an angular portion that hits parts of the articles being conveyed.

14. The article alignment device according to claim 13, wherein the posture changing component further has an article guide component that extends along the conveyance direction from the angular portion.

15. The article alignment device according to any one of claim 12 to claim 14, wherein the posture changing component withdraws from over a conveyance surface of the first conveyor when it is not necessary to change the posture of the articles on the conveyance surface.
